# EUROPEAN PATENT APPLICATION

(11) **EP 3 828 445 A1**
(43) Date of publication of application: **02.06.2021**
(21) Application number: 19211725.7
(22) Date of filing: 27.11.2019
(51) Int. Cl.: F16H 63/30, F16H 61/32, F16H 63/20

(54) **ACTUATOR ARRANGEMENT FOR A GEARBOX**

(71) Applicant: KNORR-BREMSE Systeme für Nutzfahrzeuge GmbH, 80809 München (DE)
(72) Inventor: Kawaguchi, Tomoyoshi, Higashimatsuyama Saitama 3550018 (JP)

(57) **Abstract**

The present invention relates to an actuator arrangement (10) for a gear box. The actuator arrangement comprises a first transmission element (20), a second transmission element (30), a first actuation element (60), and a second actuation element (70). The first actuation element is configured to actuate the first transmission element. The second actuation element is configured to actuate the second transmission element. The first transmission element is substantially parallel to the second transmission element. The first transmission element and second transmission element define a shaft assembly having a first end and a second end. The first actuation element is connected to the first transmission element at the first end of the shaft assembly. The second actuation element is connected to the second transmission element at the second end of the shaft assembly.

## Description

### FIELD OF THE INVENTION

The present invention relates to an actuator arrangement for a gearbox, and a gearbox having such an actuator arrangement.

### BACKGROUND OF THE INVENTION

A gearbox with minimum three gears utilises two gear shift lanes to engage and disengage gears. However, current actuator arrangements that activate such gearshift levers in order to engage and disengage gears of a gearbox are very bulky.

There is a need to address this issue.

### SUMMARY OF THE INVENTION

Therefore, it would be advantageous to have an improved actuator arrangement for a gearbox.

The object of the present invention is solved with the subject matter of the independent claims, wherein further embodiments are incorporated in the dependent claims. It should be noted that the following described aspects of the invention apply also for the actuator arrangement for a gearbox having such an actuator arrangement.

In a first aspect, there is provided an actuator arrangement for a gear box, the actuator arrangement comprising:
- a first transmission element,
- a second transmission element,
- a first actuation element, and
- a second actuation element.

The first actuation element is configured to actuate the first transmission element. The second actuation element is configured to actuate the second transmission element. The first transmission element is substantially parallel to the second transmission element. The first transmission element and second transmission element define a shaft assembly having a first end and a second end. The first actuation element is connected to the first transmission element at the first end of the shaft assembly. The second actuation element is connected to the second transmission element at the second end of the shaft assembly.

Thus, because the motors are mounted at either ends of the actuator arrangement, the opposite side arrangement enables the distance between the two shafts to be reduced. Consequently the complete actuator arrangement or module can be more compact.

In an example, actuation of the first transmission element comprises the first actuator element being configured to rotate the first transmission element about a first transmission element rotational axis. Actuation of the second transmission element comprises the second actuation element being configured to rotate the second transmission element about a second transmission element rotational axis

In an example, the first transmission element rotational axis is substantially parallel to the second transmission element rotational axis.

In an example, the actuator arrangement comprises a first gear shift finger and a second gear shift finger. Rotation of the first transmission element is configured to activate the first gear shift finger. Rotation of the second transmission element is configured to activate the second gear shift finger.

The gear shift fingers can translate, but can also rotate and be considered as gear shift levers.

In an example, a distance between the first end and second end of the shaft assembly is greater than a distance between the first transmission element rotational axis and the second transmission element rotational axis measured in a direction perpendicular to the first transmission element rotational axis.

In other words, the width of the actuator arrangement is compact, thereby providing a space saving module for a gearbox such as a gearbox for a vehicle.

In an example, activation of the first gear shift finger comprises a rotation of the first gear shift finger about a first gear shift finger rotational axis, and wherein activation of the second gear shift finger comprises a rotation of the second gear shift finger about a second gear shift finger rotational axis.

In an example, the first gear shift finger rotational axis is perpendicular to the first transmission element rotational axis, and wherein the second gear shift finger rotational axis is perpendicular to the second transmission element rotational axis.

Thus, rotation of the transmission elements leads to an associated rotational activation movement of the gear shift fingers in the direction of the transmission element axes.

In an example, the first gear shift finger rotational axis is the same as the second gear shift finger rotational axis, and the first gear shift finger and the second gear shift finger are configured to rotate about a common shaft.

In this manner, a very compact and stable system is provided, requiring only one pivot shaft for the gear shift fingers that can then rotate independently about the common pivot shaft to engage and disengage gears.

In an example, the actuator arrangement comprises a first position sensor and/or a second position sensor. The first position sensor is configured to measure a movement of the first gear shift finger or movement of the first nut. The second position sensor is configured to measure a movement of the second gear shift finger or movement of the second nut.

In this manner, a translational movement of the nut or finger can be monitored.

In an example, the actuator arrangement comprises a first angle sensor and a second angle sensor. The first angle sensor is configured to measure an angular movement of the first gear shift finger about the first gear shift finger rotational axis. The second angle sensor is configured to measure an angular movement of the second gear shift finger about the second gear shift finger rotational axis.

In an example, the actuator arrangement comprises a first shaft rotation angle sensor and/or a second shaft rotation angle sensor. The first shaft rotation angle sensor is configured to measure a rotation angle of the first transmission element about the first transmission element rotational axis. The second shaft rotation angle sensor is configured to measure a rotation angle movement of the second transmission element about the second transmission rotational axis.

In an example, the first gear shift finger rotational axis is fixed with respect to the first transmission element rotational axis, and the second gear shift finger rotational axis is fixed with respect to the second transmission element rotational axis.

Thus, a very stable and accurate means in provided to determine the exact rotational positions of the gear shift fingers to ensure correct gear engagement and disengagement.

In an example, at least one part of the first transmission element comprises a threaded outer portion with a first nut mounted about the threaded outer portion. Rotation of the first transmission element is configured to translate the first nut along at least a section of the threaded outer portion to activate the first gear shift finger. At least one part of the second transmission element comprises a threaded outer portion with a second nut mounted about the threaded outer portion. Rotation of the second transmission element is configured to translate the second nut along at least a section of the threaded outer portion to activate the second gear shift finger.

In this manner, as an actuation element rotates a transmission element, the nut is driven along the transmission element and this provides for a very accurate and controllable gear shift activation mechanism.

In an example, the actuator arrangement is configured such that rotation of the first transmission element is configured not to rotate the first nut with respect to a body of the actuator arrangement. The actuator arrangement is configured such that rotation of the second transmission element is configured not to rotate the second nut with respect to the body of the actuator arrangement.

In an example, a portion of the first gear shift finger is coupled to the first nut such that the portion can rotate with respect to the first nut, and a portion of the second gear shift finger is coupled to the second nut such that the portion can rotate with respect to the second nut.

In others words, as the nut is moved along the shaft due to the shaft's rotation, the part of the gear shift finger coupled to the nut can slide and rotate, via for example a cut or groove, about one or two lugs at the sides of the nuts.

In an example, the portion of the first gear shift finger is coupled to the first nut such that the portion can translate with respect to the first nut. The portion of the second gear shift finger is coupled to the second nut such that the portion can translate with respect to the second nut.

In others words, as the nut is moved along the transmission element due to the transmission element's rotation, the part of the gear shift finger coupled to the nut can slide and rotate, via for example a cut or groove, about one or two lugs at the sides of the nuts along the transmission element axis.

In an example, the first actuation element is an electric motor and wherein the second actuation element is an electric motor.

In a second aspect, there is provided a gear box comprising an actuator arrangement according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of an actuator arrangement for a gearbox;
Fig. 2 shows a schematic representation of an example of gear box having an actuator arrangement; and
Fig. 3 shows a schematic representation of movement sensor measuring a position or movment of a nut or finger; and
Fig. 4 shows a schematic representation of a sensor measuring a rotational position or movement of a finger.

### DETAILED DESCRIPTION OF EMBODIMENTS

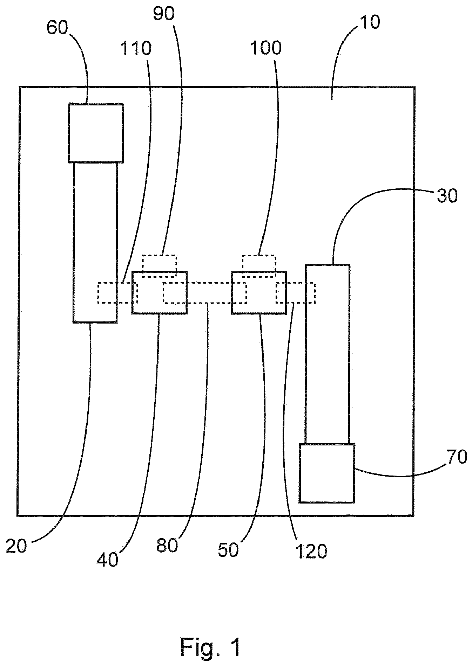

Fig. 1 shows an example of an actuator arrangement 10 for a gear box. The actuator arrangement comprises a first transmission element 20, a second transmission element 30, a first actuation element 60, and a second actuation element 70. The first actuation element is configured to actuate the first transmission element. The second actuation element is configured to actuate the second transmission element. The first transmission element is substantially parallel to the second transmission element. The first transmission element and second transmission element define a shaft assembly having a first end and a second end. The first actuation element is connected to the first transmission element at the first end of the shaft assembly. The second actuation element is connected to the second transmission element at the second end of the shaft assembly.

In an example, the first transmission element is shaft.

In an example, the second transmission element is a shaft.

In an example, the first actuation element is a motor.

In an example, the second actuation element is a motor.

In an example, the first actuation element is fixedly mounted to a body of the actuator arrangement at the first end of the shaft assembly and the second actuation element is fixedly mounted to the body of the actuator arrangement at the second end of the shaft assembly.

In an example, the first and second actuation elements are mounted to the body of the actuator arrangement with mounting flanges that are oriented substantially parallel one to the other.

In an example, the first and second transmission elements are ball screw spindles.

According to an example, actuation of the first transmission element comprises the first actuator element being configured to rotate the first transmission element about a first transmission element rotational axis.

According to an example, actuation of the second transmission element comprises the second actuation element being configured to rotate the second transmission element about a second transmission element rotational axis.

According to an example, the first transmission element rotational axis is substantially parallel to the second transmission element rotational axis.

According to an example, the actuator arrangement comprises a first gear shift finger 40, and a second gear shift finger 50. Rotation of the first transmission element is configured to activate the first gear shift finger. Rotation of the second transmission element is configured to activate the second gear shift finger.

According to an example, a distance between the first end and second end of the shaft assembly is greater than a distance between the first transmission element rotational axis and the second transmission element rotational axis measured in a direction perpendicular to the first transmission element rotational axis.

According to an example, activation of the first gear shift finger comprises a rotation of the first gear shift finger about a first gear shift finger rotational axis. Activation of the second gear shift finger comprises a rotation of the second gear shift finger about a second gear shift finger rotational axis.

According to an example, the first gear shift finger rotational axis is perpendicular to the first transmission element rotational axis, and the second gear shift finger rotational axis is perpendicular to the second transmission element rotational axis.

According to an example, the first gear shift finger rotational axis is the same as the second gear shift finger rotational axis. The first gear shift finger and the second gear shift finger are configured to rotate about a common shaft 80.

In an example, the common shaft is mounted to the body of the actuator arrangement.

In an example, the common shaft is fixedly mounted to the body of the actuator arrangement.

According to an example, the actuator arrangement comprises a first position sensor 102 and/or a second position sensor 104. The first position sensor is configured to measure a movement of the first gear shift finger or movement of the first nut. The second position sensor is configured to measure a movement of the second gear shift finger or movement of the second nut.

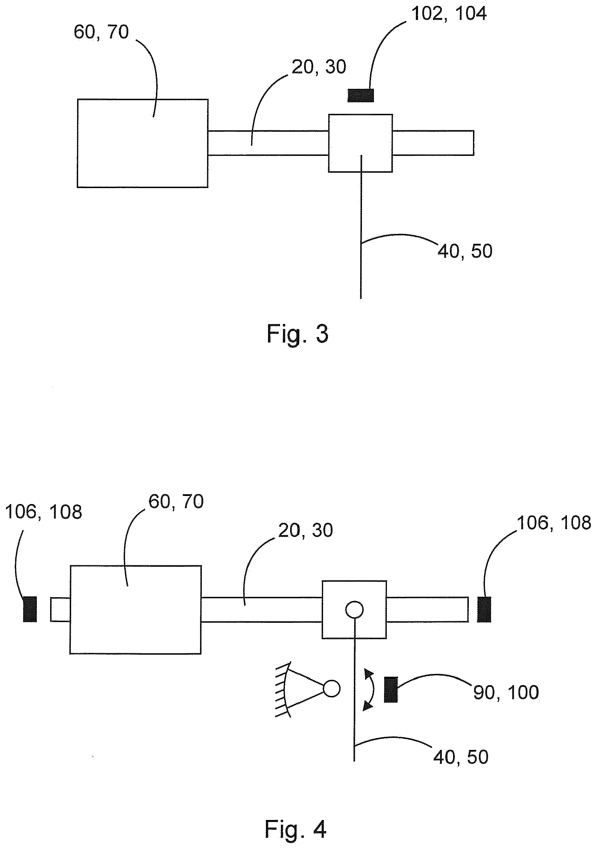

This example is exemplified in Fig. 3.

According to an example, the actuator arrangement comprises a first angle sensor 90 and a second angle sensor 100. The first angle sensor is configured to measure an angular movement of the first gear shift finger about the first gear shift finger rotational axis. The second angle sensor is configured to measure an angular movement of the second gear shift finger about the second gear shift finger rotational axis.

According to an example, the actuator arrangement comprises a first shaft rotation angle sensor 106 and/or a second shaft rotation angle sensor 108. The first shaft rotation angle sensor is configured to measure a rotation angle of the first transmission element about the first transmission element rotational axis. The second shaft rotation angle sensor is configured to measure a rotation angle movement of the second transmission element about the second transmission rotational axis.

This example is exemplified in Fig. 4, where the shaft rotation angle sensor can be positioned on the transmission element at the motor or away from the motor, and monitors rotational movement of the transmission element. In this way it can be determined from the rotational movement how the nut located around the transmission element has been moved laterally, enabling an accurate determination of gear engagement information to be provided.

According to an example, the first gear shift finger rotational axis is fixed with respect to the first transmission element rotational axis, and the second gear shift finger rotational axis is fixed with respect to the second transmission element rotational axis.

According to an example, at least one part of the first transmission element comprises a threaded outer portion with a first nut 110 mounted about the threaded outer portion. Rotation of the first transmission element is configured to translate the first nut along at least a section of the threaded outer portion to activate the first gear shift finger. At least one part of the second transmission element comprises a threaded outer portion with a second nut 120 mounted about the threaded outer portion. Rotation of the second transmission element is configured to translate the second nut along at least a section of the threaded outer portion to activate the second gear shift finger.

In an example, the first and second nuts are ball screw spindle nuts.

According to an example, the actuator arrangement is configured such that rotation of the first transmission element is configured not to rotate the first nut with respect to a body of the actuator arrangement. The actuator arrangement is configured such that rotation of the second transmission element is configured not to rotate the second nut with respect to the body of the actuator arrangement.

In an example, the gear shift fingers themselves can be coupled to a body of the actuator arrangement via a pivot shaft that can be a common pivot shaft for both gear shift fingers, enabling rotation of the gear shift fingers in the direction of the axes of the first and second transmission elements about which the nuts are mounted. Then the gear shift fingers themselves can couple to the nuts in a way that lets the transmission element rotate, but not letting the nut rotate, in order to drive the nut along the transmission element and in that manner also rotate the gear shift finger about the pivot shaft to provide for gear shift activation.

According to an example, a portion of the first gear shift finger is coupled to the first nut such that the portion can rotate with respect to the first nut, and a portion of the second gear shift finger is coupled to the second nut such that the portion can rotate with respect to the second nut.

According to an example, the portion of the first gear shift finger is coupled to the first nut such that the portion can translate with respect to the first nut. The portion of the second gear shift finger is coupled to the second nut such that the portion can translate with respect to the second nut.

According to an example, the first actuation element is an electric motor and wherein the second actuation element is an electric motor.

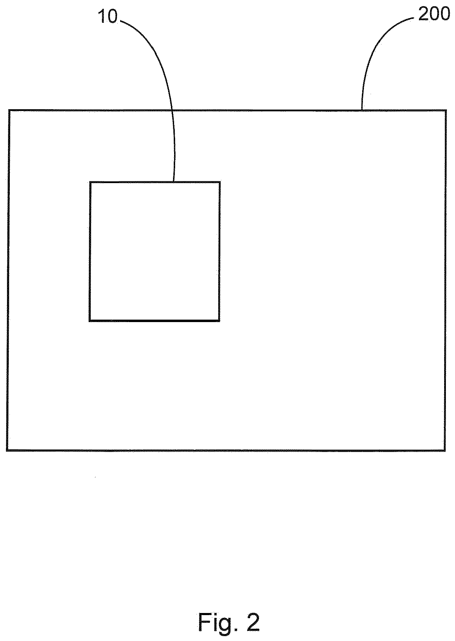

From the above discussion of the actuator arrangement, it is clear that a gearbox can comprise such an actuator arrangement, with an example of this this shown in Fig. 2.

Thus, in a detailed embodiment a first electric motor 60 is provided at one end of the actuator arrangement 10, and can rotate a first ball screw spindle or shaft 20. A second electric motor 70 is provided at the opposite end of the actuator arrangement, and can rotate a second ball screw spindle or shaft 30. Two gear shift fingers 40 and 50 are associated with the two ball screw spindles. A first ball screw spindle nut 110 is positioned around the first ball screw spindle, and an end of the first gear shift finger is positioned around the nut such that rotation of the first ball screw spindle by the first motor leads to translation of the nut along the shaft of the first ball screw spindle. The same applies for the second gear shift finger and the second ball screw spindle, which also has a second ball screw spindle nut, about which an end of the second gear shift finger is positioned. Both gear shift fingers are rotationally mounted at positions along their length on a common shaft 80. This means that rotation of a ball screw spindle leads to the associated ball screw spindle nut moving along the shaft and also moving the top part of the gear shift finger in the same direction. The whole gearshift finger rotates about the common shaft, with the bottom part of the gear shift finger then moving in the opposite direction to the top part. All of these translational and rotational movements can be monitored, with only monitoring of one movement is enough to determine to determine the exact positions of the gear shift fingers to ensure correct gear engagement and disengagement. However, by monitoring more than one different movement, greater accuracy is provided and redundancy is provided in case of sensor failure. The actuator is assembled on a transmission housing, and the 2 gearshift fingers point into the shift lanes. If a gear needs to be engaged or disengaged, the electric motor turns are ball screw spindle, leading to linear movement of the nut because it cannot turn. The gear shift finger moves as discussed above, and moves into the shift Lane and the gear is engaged or disengaged. By having, the electric motors mounted to the actuator assembly at opposite ends, means that the ball screw spindles or shafts 20, 30 can be positioned close to each other. In this way the lateral dimension of the actuator arrangement can be kept to a minimum, providing necessary space saving for such a gearbox finding utility for example in the vehicle.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE NUMBERS

- 10: Actuator arrangement;
- 20: First transmission element/shaft or first ball screw spindle;
- 30: Second transmission element/shaft or second ball screw spindle;
- 40: First gear shift finger;
- 50: Second gear shift finger;
- 60: First motor - electric;
- 70: Second motor - electric;
- 80: Common shaft;
- 90: First angle sensor;
- 100: Second angle sensor;
- 102: First position sensor;
- 104: Second position sensor;
- 106: First shaft rotation angle sensor;
- 108: Second shaft rotation angle sensor;
- 110: First nut or first ball screw spindle nut:
- 120: Second nut or second ball screw spindle nut:
- 200: Gear box

## Claims

1. An actuator arrangement (10) for a gear box, the actuator arrangement comprising:
- a first transmission element (20);
- a second transmission element (30);
- a first actuation element (60); and
- a second actuation element (70);
wherein, the first actuation element is configured to actuate the first transmission element;
wherein, the second actuation element is configured to actuate the second transmission element;
wherein, the first transmission element is substantially parallel to the second transmission element, wherein the first transmission element and second transmission element define a shaft assembly having a first end and a second end; and
wherein, the first actuation element is connected to the first transmission element at the first end of the shaft assembly, and wherein the second actuation element is connected to the second transmission element at the second end of the shaft assembly.

2. Actuator arrangement according to claim 1, wherein actuation of the first transmission element comprises the first actuator element being configured to rotate the first transmission element about a first transmission element rotational axis; and wherein actuation of the second transmission element comprises the second actuation element being configured to rotate the second transmission element about a second transmission element rotational axis; and wherein the first transmission element rotational axis is substantially parallel to the second transmission element rotational axis.

3. Actuator arrangement according to any of claims 1-2, wherein the actuator arrangement comprises a first gear shift finger (40), and a second gear shift finger (50);
wherein rotation of the first transmission element is configured to activate the first gear shift finger, and wherein rotation of the second transmission element is configured to activate the second gear shift finger.

4. Actuator arrangement according to any of claims 1-3, wherein a distance between the first end and second end of the shaft assembly is greater than a distance between the first transmission element rotational axis and the second transmission element rotational axis measured in a direction perpendicular to the first transmission element rotational axis.

5. Actuator arrangement according to any of claims 3-4, wherein activation of the first gear shift finger comprises a rotation of the first gear shift finger about a first gear shift finger rotational axis, and wherein activation of the second gear shift finger comprises a rotation of the second gear shift finger about a second gear shift finger rotational axis.

6. Actuator arrangement according to claim 5, wherein the first gear shift finger rotational axis is perpendicular to the first transmission element rotational axis, and wherein the second gear shift finger rotational axis is perpendicular to the second transmission element rotational axis.

7. Actuator arrangement according to any of claims 5-6, wherein the first gear shift finger rotational axis is the same as the second gear shift finger rotational axis, and wherein the first gear shift finger and the second gear shift finger are configured to rotate about a common shaft (80).

8. Actuator arrangement according to any of claims 5-7, wherein the actuator arrangement comprises a first position sensor (102) and/or a second position sensor (104), wherein the first position sensor is configured to measure a movement of the first gear shift finger or movement of the first nut and wherein the second position sensor is configured to measure a movement of the second gear shift finger or movement of the second nut.

9. Actuator arrangement according to any of claims 5-8, wherein the actuator arrangement comprises a first angle sensor (90) and a second angle sensor (100), wherein the first angle sensor is configured to measure an angular movement of the first gear shift finger about the first gear shift finger rotational axis, and wherein the second angle sensor is configured to measure an angular movement of the second gear shift finger about the second gear shift finger rotational axis.

10. Actuator arrangement according to any of claims 5-9, wherein the actuator arrangement comprises a first shaft rotation angle sensor (106) and/or a second shaft rotation angle sensor (108), wherein the first shaft rotation angle sensor is configured to measure a rotation angle of the first transmission element about the first transmission element rotational axis, and wherein the second shaft rotation angle sensor is configured to measure a rotation angle movement of the second transmission element about the second transmission rotational axis.

11. Actuator arrangement according to any of claims 5-10, wherein the first gear shift finger rotational axis is fixed with respect to the first transmission element rotational axis, and wherein the second gear shift finger rotational axis is fixed with respect to the second transmission element rotational axis.

12. Actuator arrangement according to any of claims 3-11, wherein at least one part of the first transmission element comprises a threaded outer portion with a first nut (110) mounted about the threaded outer portion, wherein rotation of the first transmission element is configured to translate the first nut along at least a section of the threaded outer portion to activate the first gear shift finger, and wherein at least one part of the second transmission element comprises a threaded outer portion with a second nut (120) mounted about the threaded outer portion, wherein rotation of the second transmission element is configured to translate the second nut along at least a section of the threaded outer portion to activate the second gear shift finger.

13. Actuator arrangement according to claim 12, wherein the actuator arrangement is configured such that rotation of the first transmission element is configured not to rotate the first nut with respect to a body of the actuator arrangement, and is configured such that rotation of the second transmission element is configured not to rotate the second nut with respect to the body of the actuator arrangement.

14. Actuator arrangement according to any of claims 12-13, wherein a portion of the first gear shift finger is coupled to the first nut such that the portion can rotate with respect to the first nut, and wherein a portion of the second gear shift finger is coupled to the second nut such that the portion can rotate with respect to the second nut.

15. Actuator arrangement according to claim 14, wherein the portion of the first gear shift finger is coupled to the first nut such that the portion can translate with respect to the first nut, and wherein the portion of the second gear shift finger is coupled to the second nut such that the portion can translate with respect to the second nut.

16. Actuator arrangement according to any of claims 1-15, wherein the first actuation element is an electric motor and wherein the second actuation element is an electric motor.

17. A gear box (200) comprising an actuator arrangement (10) according to any of claims 1-16.
